# EUROPEAN PATENT APPLICATION

(11) **EP 4 564 805 A2**
(43) Date of publication of application: **04.06.2025**
(21) Application number: 24214305.5
(22) Date of filing: 20.11.2024
(51) Int. Cl.: H04N 7/15

(54) **METHOD AND APPARATUS FOR RENDERING VIDEO CARD, ELECTRONIC DEVICE, AND MEDIUM**

(30) Priority: 20.11.2023 CN 202311550251
(71) Applicant: BEIJING YOUZHUJU NETWORK TECHNOLOGY CO. LTD., Beijing 101299 (CN)
(72) Inventor: CHEN, Yuzhong, Beijing, 100028 (CN)
(74) Representative: Dentons UK and Middle East LLP

(57) **Abstract**

Embodiments of the present disclosure relate to a method and an apparatus for rendering a video card, an electronic device, and a medium. The method includes obtaining a feature of a plurality of historical videos, and determining dwell duration for a target video based on the feature of the plurality of historical videos. The method further includes: in response to the dwell duration meeting a predetermined condition, deferring rendering of a card associated with the target video. In the embodiments of the present disclosure, rendering of video cards can be deferred in some cases, which reduces lag in video playing, making video playing smoother in the case of fast switching, thereby improving the user experience.

## Description

### FIELD

Embodiments of the present disclosure relate to the field of computers, and more specifically, to a method and an apparatus for rendering a video card, an electronic device, and a medium.

### BACKGROUND

With development of network technologies and video technologies, video application services are becoming increasingly popular. During a video playing process, a card with a relatively independent function that comes with a video may be displayed in a user interface sometimes. Usually, the card may be displayed after the video has played for a certain period of time, instead of being present on a video display interface all the time.

### SUMMARY

Embodiments of the present disclosure provide a method and an apparatus for rendering a video card, an electronic device, and a medium.

According to a first aspect of the present disclosure, a method for rendering a video card is provided. The method includes obtaining a feature of a plurality of historical videos. The method further includes determining dwell duration for a target video based on the feature of the plurality of historical videos. The method further includes: in response to the dwell duration meeting a predetermined condition, deferring rendering of a card associated with the target video.

According to a second aspect of the present disclosure, an apparatus for rendering a video card is provided. The apparatus includes a feature obtaining module configured to obtain a feature of a plurality of historical videos. The apparatus further includes a dwell duration determination module configured to determine dwell duration for a target video based on the feature of the plurality of historical videos. The apparatus further includes a card rendering module configured to: in response to the dwell duration meeting a predetermined condition, defer rendering of a card associated with the target video.

According to a third aspect of the present disclosure, an electronic device is provided. The electronic device includes a processor and a memory coupled to the processor. The memory has instructions stored therein, where the instructions, when executed by the processor, cause the electronic device to perform the method according to the first aspect.

According to a fourth aspect of the present disclosure, a computer-readable storage medium is provided. The computer-readable storage medium have computer-executable instructions stored thereon, where the computer-executable instructions are executed by a processor to implement the method according to the first aspect.

The summary is provided to describe selection of concepts in a simplified form, and the concepts are further described in the following detailed description. The summary is not intended to identify key features or primary features of the claimed subject matter, nor to limit the scope of the claimed subject matter.

### BRIEF DESCRIPTION OF THE DRAWINGS

The foregoing and other features, advantages and aspects of embodiments of the present disclosure become more apparent with reference to the following detailed description and in conjunction with the accompanying drawings. In the accompanying drawings, the same or similar reference numerals denote the same or similar elements.
FIG. 1 is a schematic diagram of an example environment in which a method for rendering a video card can be implemented according to some embodiments of the present disclosure;
FIG. 2 is a flowchart of a method for rendering a video card according to some embodiments of the present disclosure;
FIG. 3 is a schematic diagram of a video display interface according to some embodiments of the present disclosure;
FIG. 4 is a flowchart of a method for deferring rendering of a card according to some embodiments of the present disclosure;
FIG. 5 is a flowchart of a method for deferring rendering of a card for different duration according to some embodiments of the present disclosure;
FIG. 6 is a schematic diagram of an example environment in which a method for training a fast/slow flicking model can be implemented according to some embodiments of the present disclosure;
FIG. 7 is a block diagram of an apparatus for rendering a video card according to some embodiments of the present disclosure; and
FIG. 8 is a block diagram of an electronic device according to some embodiments of the present disclosure.
Throughout the accompanying drawings, the same or similar reference numerals denote the same or similar elements.

### DETAILED DESCRIPTION OF EMBODIMENTS

It can be understood that the data involved in the technical solutions (including, but not limited to, the data itself and the access to or use of the data) shall comply with the requirements of corresponding laws, regulations, and relevant provisions.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, when an active request from the user is received, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

In the description of the embodiments of the present disclosure, the term "including" and similar terms thereof shall be understood as non-exclusive inclusion, that is, "including but not limited to". The term "based on" should be understood as "at least partially based on". The term "an embodiment" or "the embodiment" should be understood as "at least one embodiment". The terms "first", "second", and the like may refer to different objects or a same object, unless otherwise specified. Other explicit and implicit definitions may be further included below.

On a video community platform, a user may switch to play different videos by flicking a display screen. After some videos are played for a period of time, cards with relatively independent functions are displayed in the videos, and these cards may have a recommendation or introduction function. Controls are usually displayed on the cards. The user may access pages other than the videos by tapping the controls on the cards, that is, after the user taps the controls on the cards, video playing pages on the display screen are switched to pages corresponding to the cards, and these pages may display content associated with the videos to provide the recommendation or introduction function.

When the user flicks the display screen to switch a played video, a client device loads both a switched-to video and a card corresponding to the switched-to video. After the video starts to be played or is played for a period of time, the client device renders the card. A higher speed at which the user flicks indicates a larger number of videos and cards that need to be loaded. To load a large number of cards, client resources are occupied, and resources for video loading are preempted. Consequently, lags occur in video playing, making it difficult to provide the user with smooth viewing experience.

To resolve at least the foregoing problems, embodiments of the present disclosure provide a solution for rendering a video card. In the solution, dwell duration for a target video is predicted based on a feature of a historical video viewed by a user, a time for rendering a card is determined based on the dwell duration, and rendering of the card on the target video may be deferred if the predicted dwell duration is excessively short. Therefore, in the embodiments of the present disclosure, excessive resource consumption caused by loading of a large number of video cards can be avoided, and lags during video playing can be reduced, so that video playing is smoother in a case of fast switching, thereby improving the user experience.

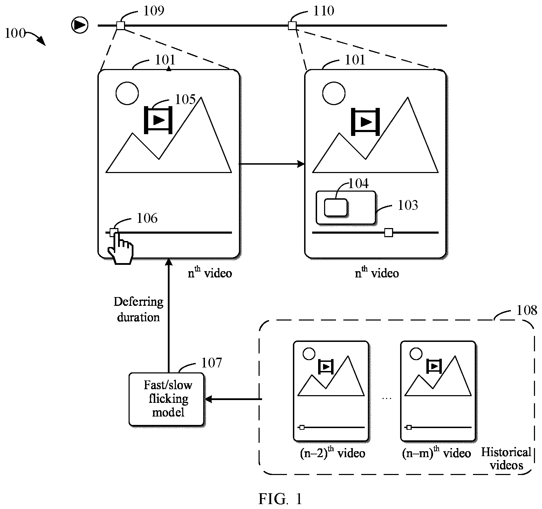

FIG. 1 is a schematic diagram of an example environment 100 in which a method for rendering a video card can be implemented according to some embodiments of the present disclosure. As shown in FIG. 1, the example environment 100 may include a user interface 101, which may be, for example, a touchscreen display, and a user may enter a command into a client by touching and/or making a gesture on a display screen. In some embodiments, a video may be displayed in the user interface 101, and a playing control 105 and a progress adjust control 106 may be displayed in the video. The user may play or pause the video through a touch operation on the playing control 105, and jump through the video through a touch operation on the progress adjust control 106, so that the video is played based on a progress bar as required. In some embodiments, the playing control 105 may be hidden in a default state.

Referring to FIG. 1, the example environment 100 may further include a fast/slow flicking model 107. The fast/flow flicking model 107 may be an on-device intelligent model such as an inference model trained on a cloud and deployed on an end. The fast/slow flicking model 107 is configured to extract a feature 108 of a plurality of historical videos, predict dwell duration for a target video based on the feature 108 of the historical videos, and determine, based on the dwell duration, time for rendering a video card. In some embodiments, the historical videos may be a plurality of videos before the target video. In some embodiments, the historical videos are separated from the target video by at least one video between, for example, the historical videos may be a plurality of videos that have been flicked through before the target video, and do not include a currently playing video. The number of historical videos may be selected according to actual requirements, to meet a desired objective of calculating the dwell duration.

Referring to FIG. 1, after the fast/slow flicking model 107 determines the time for card rendering, if card rendering is deferred, both deferring duration and a specific rendering time point for a card may be determined. For example, an original rendering time preset for the card is a time node at which the video starts to be played, and an output of the fast/slow flicking model 107 may be normally rendering the card or deferring rendering of the card. If the deferring duration is five seconds, the card is rendered five seconds after the video is played. Certainly, the card may alternatively be rendered after the video is played for a period of time. For example, an original rendering time preset for the card is five seconds after the video starts to be played, and an output of the fast/slow flicking model 107 may be normally rendering the card or deferring rendering of the card. If the deferring duration is five seconds, the card is rendered ten seconds after the video starts to be played. An example in which the card rendering time is a second time node 110 is used for description below. No card has appeared on a display screen 101 when playing of the target video proceeds to a first time node 109. If the user switches the target video before playing of the video proceeds to the second time node 110, it indicates that the dwell time of the user for the target video is excessively short. In this case, the card of the target video is not rendered. If playing of the target video proceeds to the second time node 110, it indicates that the dwell time of the user for the target video reaches a requirement. In this case, a card 103 on the target video is rendered, and a control 104 is displayed on the card 103, such that the user may access, through a touch operation thereof on the control 104, a page related to the card, to access and learn of content related to the video.

Therefore, in the solution of the present disclosure, the time for card rendering is determined by predicting the dwell duration of the user for the target video. If the predicted dwell duration is excessively short, it indicates that the user shows little interest in the target video, and it may be unnecessary to render the card having a function of introducing and recommending the content related to the video. In this case, the fast/slow flicking model outputs the deferring time to defer card rendering. In the present disclosure, an unnecessary video card can be prevented from being loaded, and client resources can be properly allocated, such that lag in video playing can be reduced, making video playing smoother in the case of fast switching, thereby improving the user experience.

It should be understood that an architecture and a function in the example environment 100 are described for an illustrative purpose only, without implying any limitation on the scope of the present disclosure. This embodiment of the present disclosure may be further applied to other environments with different structures and/or functions.

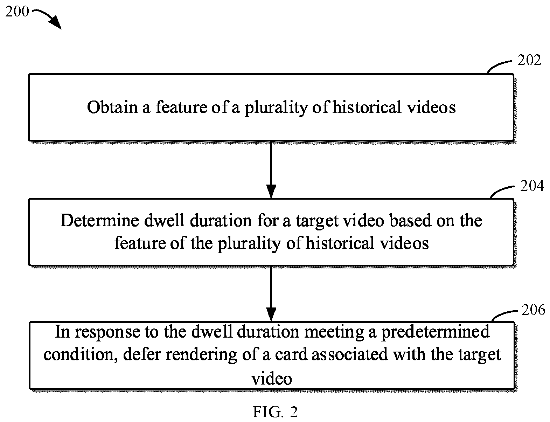

The following describes in detail processes of the embodiments of the present disclosure with reference to FIG. 2 to FIG. 8. For ease of understanding, specific data mentioned in the following description is exemplary, and is not intended to limit the scope of protection of the present disclosure. It can be understood that the embodiments described below may further include additional actions not shown and/or actions shown may be omitted, and the scope of the present disclosure is not limited in this aspect.

FIG. 2 is a flowchart of a method 200 for rendering a video card according to some embodiments of the present disclosure. At block 202, a feature of a plurality of historical videos is obtained. For example, as shown in FIG. 1, the plurality of historical videos may be a plurality of videos that have been switched before a target video. Alternatively, the historical videos may include one video that is switched before the target video. The number of historical videos may be selected based on an actual requirement, provided that an objective of dwell duration is met. In some embodiments, the historical videos may include a specified-scene video. The specified-scene video may be one of a plurality of types of videos, for example, an image-text video, a long video, and a live video. A scene of the specified-scene video may be determined according to an actual application scenario.

In some embodiments, when the plurality of historical videos include the specified-scene video, the obtained feature may include a common feature of the plurality of historical videos and a scene feature of the specified-scene video. Diversified features can make predicted dwell duration more accurate, thereby outputting a more accurate time for card rendering.

At block 204, dwell duration for a target video is determined based on the feature of the plurality of historical videos. For example, referring to FIG. 1, a fast/slow flicking model 107 may be disposed in a client. The fast/slow flicking model 107 extracts the features of the plurality of historical videos, and analyzes dwell duration for the plurality of historical videos, to predict the dwell duration for the target video. The dwell duration is duration in which a user dwells on the target video after switching to the target video and before switching to a next video. A level of interest of the user in the target video may be determined by determining the dwell duration, thereby determining a time for card rendering.

At block 206, in response to the dwell duration meeting a preset condition, rendering of a card associated with the target video is deferred. For example, as shown in FIG. 1, a preset value or a preset range may be set for the preset condition. The preset condition may be specifically selected based on an actual application scenario and another requirement. No card is displayed on a display screen 101 at a first time node 109, and a card 103 is displayed at a second time node 110. If an original rendering time point for a card is the first time node 109, and a deferred rendering time point is the second time node 110, deferring duration is the time difference between the first time node 109 and the second time node 110. In the embodiments of the present disclosure, the card may be at least an object rendered on a played video, or may be referred to as a component. In addition, different times for deferring rendering of the card may be set depending on video traffic scenarios or service modules.

Therefore, according to the method 200 in the embodiments of the present disclosure, the time for card rendering is determined by predicting the dwell duration of the user for the target video. If the predicted dwell duration is excessively short, rendering of the card on the target video is deferred, to avoid loading an unnecessary video card, properly allocate client resources, and reduce lag problems during video playing, so that video playing is smoother in a case of fast switching, thereby improving the user experience. Therefore, according to the method 200 in this embodiment of the present disclosure, possible dwell duration of the user for a subsequent video may be predicted based on some features of previous videos viewed by the user, thereby dynamically determining a time for loading a card in the subsequent video.

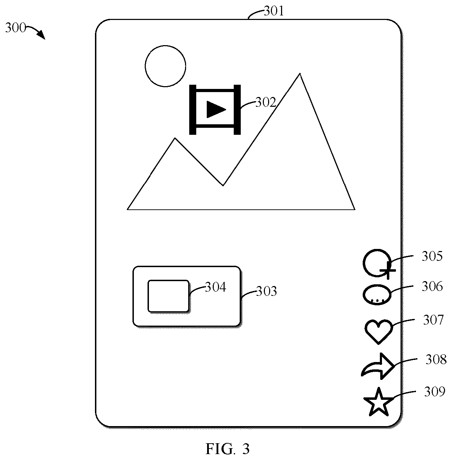

The following specifically describes, with reference to FIG. 3 to FIG. 5, a process of determining the time for card rendering. In the embodiments of the present disclosure, description is made according to sequences of feature description and setting of preset conditions. Specific data mentioned in the following description is exemplary, and is not intended to limit the scope of protection of the present disclosure. It can be understood that the embodiments described below may further include additional actions not shown and/or actions shown may be omitted, and the scope of the present disclosure is not limited in this aspect.

FIG. 3 is a schematic diagram of a video display interface 300 according to some embodiments of the present disclosure. In some embodiments, a video may be displayed in a user interface 301. A playing control 302, a card 303, a card control 304, an avatar control 305, a comment control 306, a like control 307, a share control 308, and a favorites control 309 are displayed in the user interface 301. It should be understood that the user interface 301 may include more or fewer controls than those shown in FIG. 3. A user may play or pause the video through a touch operation on the playing control 302, switch, through a touch operation on the card control 304, the video to a page corresponding to the card, enter a homepage of a video publisher through a touch operation on the avatar control 305, make a comment on the video through a touch operation on the comment control 306, give a like to the video through a touch operation on the like control 307, share the video with another user or on another platform through a touch operation on the share control 308, and add the video to favorites through a touch operation on the favorites control 309.

In some embodiments, the obtained feature of historical videos may include at least one of average playing duration of the plurality of historical videos, the smallest playing duration of the plurality of historical videos, the largest playing duration of the plurality of historical videos, a number of touches on a like control for the plurality of historical videos, a number of touches on a comment control for the plurality of historical videos, a number of playing completions of the plurality of historical videos, a number of touches on an avatar control for the plurality of historical videos, and a number of skips for the plurality of historical videos. A fast/slow flicking model determines dwell duration for a target video based on the features of the historical videos. It should be understood that the playing duration of the historical videos can be a reference indicator for determining the dwell time of the user for the target video, and the number of times of interactions between the user and the controls displayed in the user interface 301 can also provide a basis for determining the dwell time of the user. Diversified extracted features can make the determined dwell time of the user for the target video more accurate, to more accurately calculate the time for card rendering, thereby improving the user experience, and properly allocating resources.

In some embodiments, when the plurality of historical videos include a specified-scene video, the obtained feature may include a common feature of the plurality of historical videos and a scene feature of the specified-scene video. The scene feature may include at least one of a number of taps on a specified scene, a number of skips for the specified scene, a distribution of likes on the specified scene, and a distribution of dislikes on the specified scene.

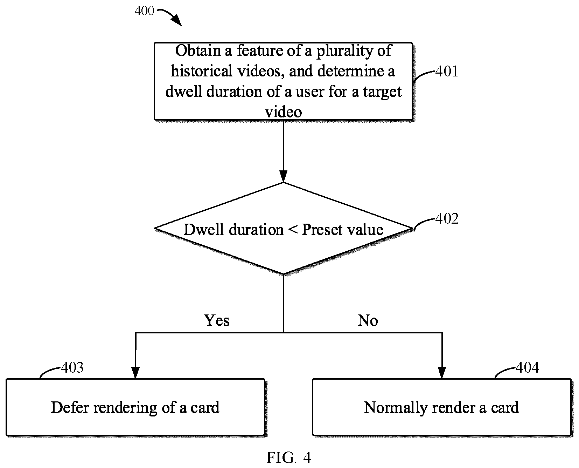

FIG. 4 is a flowchart of a method 400 for deferring rendering of a card according to some embodiments of the present disclosure. At block 401, a feature of a plurality of historical videos is obtained, and dwell duration for a target video is determined. A method and a principle of obtaining the feature and determining the dwell duration are consistent with those described above. Details are not described herein again. At block 402, whether the dwell duration is less than a preset value is determined. After the dwell duration is determined, whether the dwell duration meets a preset condition is determined. A preset value or a preset range may be set for the preset condition. The preset condition may be specifically selected based on an actual application scenario and another requirement. An example in which the preset condition is that the dwell duration is less than the preset value is used for description below. In some embodiments of the present disclosure, when it is determined that the dwell duration is less than the preset value, it may be assumed that a user is currently in a fast flicking state; and when it is determined that the dwell duration is greater than or equal to the preset value, it may be assumed that the user is currently in a slow flicking state. Therefore, in this embodiment of the present disclosure, a time for card rendering can be determined based on fast/slow flicking of the user during video viewing, thereby determining an optimal time for card loading, and optimizing user flicking and viewing experience.

At block 403, rendering of a card is deferred. When the dwell duration for the target video is less than the preset value, indicating that the predicted dwell duration is excessively short, rendering of the card on the target video is deferred, to avoid loading an unnecessary video card, properly allocate resources, and reduce lag problems during video playing. At block 404, a card is normally rendered. When the dwell duration for the target video is greater than or equal to the preset value, indicating that the predicted dwell duration is normal, the card is rendered at an original time point.

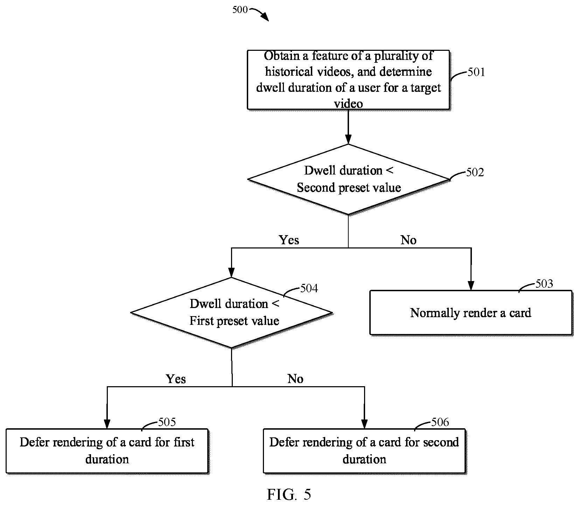

FIG. 5 is a flowchart of a method 500 for deferring rendering of a card for different duration according to some embodiments of the present disclosure. At block 501, a feature of a plurality of historical videos is obtained, and dwell duration for a target video is determined. A method and a principle of obtaining the feature and determining the dwell duration are consistent with those described above. Details are not described herein again. At block 502, whether the dwell duration is less than a second preset value is determined. After the dwell duration is determined, whether the dwell duration meets a preset condition is determined. One preset value or a plurality of different preset values may be set for the preset condition. The preset condition may be specifically selected based on an actual application scenario and another requirement. An example in which two preset values are set for the preset condition is used for description below. At block 503, a card is normally rendered. When the dwell duration for the target video is greater than or equal to the second preset value, indicating that the predicted dwell duration is normal, the card is rendered at an original time point.

At block 504, whether the dwell duration is less than a first preset value is determined. When the dwell duration is less than the second preset value, whether the dwell duration is less than the first preset value is further determined, where the first preset value is less than the second preset value, for example, the first preset value is three seconds, and the second preset value is five seconds. At block 505, when the dwell duration is less than the first preset value, rendering of a card is deferred for first duration. At block 506, when the dwell duration is greater than or equal to the first preset value, rendering of a card is deferred for second duration. In this embodiment of the present disclosure, the second preset value is greater than the first preset value, and the second duration is less than the first duration. Different levels of preset values correspond to different levels of deferring duration, that is, longer dwell time of a user indicates an earlier card rendering time point. According to the solution of this embodiment of the present disclosure, different time for card rendering can be set based on different situations, thereby further allocating client resources, and improving the user experience.

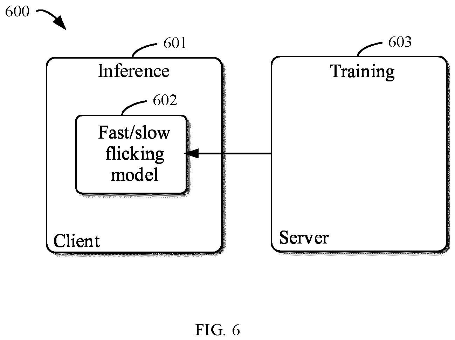

FIG. 6 is a schematic diagram of an example environment 600 in which a method for training a fast/slow flicking model can be implemented according to some embodiments of the present disclosure. As shown in FIG. 6, the example environment 600 may include a server 603. The server may be a single server or may be a centralized or distributed server cluster (for example, a cloud). In this embodiment of the present disclosure, a fast/slow flicking model 602 is trained at a server end, and is generated through training by the server. The server 603 stores a video library and historical dwell duration data of different users for videos. A database of the server 603 may provide training data to train the fast/slow flicking model 602. It should be understood that the fast/slow flicking model 602 may alternatively be generated by any other device having a computing capability. Herein, an architecture and a function of a server 603 are described for an illustrative purpose only, without implying any limitation on the scope of the present disclosure.

In some embodiments, the fast/slow flicking model 602 may be any type of machine learning model, which may be trained based on a plurality of features of previous videos and dwell duration for a target video. The plurality of features may include average playing duration of the plurality of historical videos, the smallest value of the playing durations of the plurality of historical videos, the largest value of the playing durations of the plurality of historical videos, a number of touches on a like control for the plurality of historical videos, a number of touches on a comment control for the plurality of historical videos, a number of playing completions of the plurality of historical videos, a number of touches on an avatar control for the plurality of historical videos, a number of skips for the plurality of historical videos, etc. In some embodiments, the plurality of features may further include some features of a specified scene, for example, a number of taps on a specified scene, a number of skips for the specified scene, a distribution of likes on the specified scene, and a distribution of dislikes on the specified scene.

The example environment 600 may further include a client 601, which may be a user terminal, a mobile device, a computer, or the like. In this embodiment of the present disclosure, the fast/slow flicking model 602 is transmitted to the client 601 after being generated by the server 603. As a device used for video display, the client 601 may include a display screen. A user can view and tap, through the display screen, a video transmitted by the server end 603.

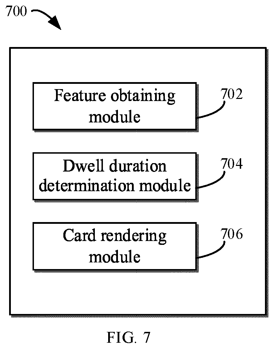

FIG. 7 is a block diagram of an apparatus 700 for rendering a video card according to some embodiments of the present disclosure. As shown in FIG. 7, the apparatus 700 includes a feature obtaining module 702, a dwell duration determination module 704, and a card rendering module 706. The feature obtaining module 702 is configured to obtain a feature of a plurality of historical videos. The dwell duration determination module 704 is configured to determine dwell duration for a target video based on the feature of the plurality of historical videos. The card rendering module 706 is configured to: in response to the dwell duration meeting a predetermined condition, defer rendering of a card associated with the target video.

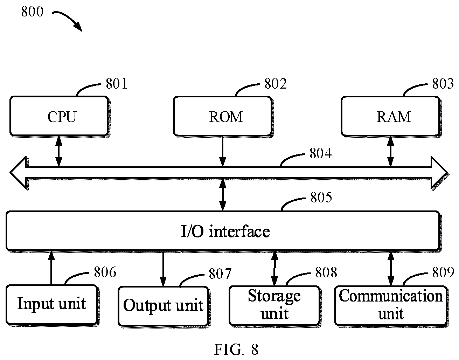

FIG. 8 is a block diagram of an electronic device 800 according to some embodiments of the present disclosure. The device 800 may be a device or an apparatus described in the embodiments of the present disclosure. As shown in FIG. 8, the device 800 includes a central processing unit (CPU) and/or a graphics processing unit (GPU) 801 that may perform a variety of appropriate actions and processing in accordance with computer program instructions stored in a read-only memory (ROM) 802 or computer program instructions loaded from a storage unit 808 into a random access memory (RAM) 803. The RAM 803 may further store various programs and data required for an operation of the device 800. The CPU and/or GPU 801, the ROM 802, and the RAM 803 are connected to each other via a bus 804. An input and/or output (I and/or O) interface 805 is also connected to the bus 804. The device 800 may further include a coprocessor, although the coprocessor is not shown in FIG. 8.

A number of components in the device 800 are connected to the I/O interface 805, including: an input unit 806, such as a keyboard, or a mouse; an output unit 807, such as a display, or a speaker of various types; a storage unit 808, such as a magnetic disk, or an optical disk; and a communication unit 809, such as a network card, a modem, or a wireless communication transceiver. The communication unit 809 allows the device 800 to exchange information and/or data with other devices over a computer network such as the Internet and/or various telecommunication networks.

Various methods or processes described above may be performed by the CPU and/or GPU 801. For example, in some embodiments, the methods may be implemented as computer software programs tangibly included in a machine-readable medium, for example, the storage unit 808. In some embodiments, some or all of the computer programs may be loaded into and/or installed onto the device 800 via the ROM 802 and/or the communication unit 809. When the computer program is loaded into the RAM 803 and executed by the CPU and/or GPU 801, one or more steps or actions in the methods or processes described above may be performed.

In some embodiments, the methods and processes described above may be implemented as a computer program product. The computer program product may include a computer-readable storage medium on which computer-readable program instructions for performing various aspects of the present disclosure are carried.

The computer-readable storage medium may be a tangible device that can hold and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples of the computer-readable storage medium (a non-exhaustive list) include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device, a punched card or an in-groove raised structure on which instructions are for example stored, and any suitable combination thereof. The computer-readable storage medium used herein is not to be interpreted as a transient signal per se, such as a radio wave or another freely propagating electromagnetic wave, an electromagnetic wave propagating through a waveguide or another transmission medium (e.g., an optical pulse through a fiber-optic cable), or an electrical signal transmitted over a wire.

The computer-readable program instructions described herein may be downloaded from the computer-readable storage medium to each computing and/or processing device, or downloaded to an external computer or external storage device over a network, such as the Internet, a local area network, a wide area network, and/or a wireless network. The network may include copper transmission cables, fiber-optic transmission, wireless transmission, routers, firewalls, switches, gateway computers, and/or edge servers. A network adapter card or network interface in each computing and/or processing device receives computer-readable program instructions from the network and forwards the computer-readable program instructions for storage in the computer-readable storage medium in each computing and/or processing device.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, including an object-oriented programming language and a conventional procedural programming language. The computer-readable program instructions may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider). In some embodiments, an electronic circuit, such as a programmable logic circuit, a field programmable gate array (FPGA), or a programmable logic array (PLA), is personalized by using state information of the computer-readable program instructions. The electronic circuit may execute the computer-readable program instructions to implement various aspects of the present disclosure.

The computer-readable program instructions may be provided to a processing unit of a general-purpose computer, a special-purpose computer, or another programmable data processing apparatus, to produce a machine, such that the instructions, when executed by the processing unit of the computer or the other programmable data processing apparatus, create an apparatus for implementing functions and/or actions specified in one or more blocks in the flowchart and/or the block diagrams. The computer-readable program instructions may alternatively be stored in the computer-readable storage medium. The instructions enable a computer, a programmable data processing apparatus, and/or another device to work in a specific manner Therefore, the computer-readable medium storing the instructions includes an artifact that includes instructions for implementing various aspects of functions and/or actions specified in one or more blocks in the flowchart and/or the block diagrams.

The computer-readable program instructions may alternatively be loaded onto a computer, another programmable data processing apparatus, or another device, such that a series of operation steps are performed on the computer, the other programmable data processing apparatus, or the other device to produce a computer-implemented process. Therefore, the instructions executed on the computer, the other programmable data processing apparatus, or the other device implement functions and/or actions specified in one or more blocks in the flowchart and/or the block diagrams.

The flowchart and the block diagrams in the accompanying drawings illustrate possible system architectures, functions, and operations of the device, the method, and the computer program product according to a plurality of embodiments of the present disclosure. In this regard, each block in the flowchart or the block diagrams may represent a part of a module, a program segment, or an instruction. The part of the module, the program segment, or the instruction includes one or more executable instructions for implementing a specified logical function. In some alternative implementations, a function noted in the block may alternatively occur in an order different from that marked in the accompanying drawings. For example, two consecutive blocks may actually be executed substantially in parallel, or may sometimes be executed in a reverse order, depending on a function involved. It should also be noted that each block in the block diagrams and/or the flowchart, and a combination of the blocks in the block diagrams and/or the flowchart may be implemented by a dedicated hardware-based system that executes specified functions or actions, or may be implemented by a combination of dedicated hardware and computer instructions.

Various embodiments of the present disclosure have been described above. The foregoing descriptions are exemplary, not exhaustive, and are not limited to the disclosed embodiments. Selection of terms used in this specification is intended to best explain principles of the embodiments, actual application, or improvements to technologies in the market, or to enable another person of ordinary skill in the art to understand the embodiments disclosed in this specification.

Some example implementations of the present disclosure are listed below.

Example 1. A method for rendering a video card, including:
obtaining a feature of a plurality of historical videos;
determining dwell duration for a target video based on the feature of the plurality of historical videos; and in response to the dwell duration meeting a predetermined condition, deferring rendering of a card associated with the target video.

Example 2. The method according to Example 1, further including:
determining the plurality of historical videos before the target video;
determining whether the plurality of historical videos include a specified-scene video; and
in response to the plurality of historical videos including the specified-scene video, obtaining a common feature of the plurality of historical videos and a scene feature.

Example 3. The method according to either of Examples 1 and 2, where the common feature includes at least one of: average playing duration of the plurality of historical videos, a smallest playing duration of the plurality of historical videos, a largest playing duration of the plurality of historical videos, a number of touches on a like control for the plurality of historical videos, a number of touches on a comment control for the plurality of historical videos, a number of playing completions of the plurality of historical videos, a number of touches on an avatar control for the plurality of historical videos, and a number of skips for the plurality of historical videos.

Example 4. The method according to any one of Examples 1 to 3, where the scene feature includes at least one of: a number of taps on a specified scene, a number of skips for the specified scene, a distribution of likes on the specified scene, and a distribution of dislikes on the specified scene.

Example 5. The method according to any one of Examples 1 to 4, where the deferring rendering of a card associated with the target video includes:
determining whether the dwell duration is less than a preset value; and
deferring the rendering of the card in response to the dwell duration being less than the preset value.

Example 6. The method according to any one of Examples 1 to 5, where the deferring rendering of a card associated with the target video includes:
determining whether the dwell duration is less than a first preset value;
deferring the rendering of the card for first duration in response to the dwell duration being less than the first preset value; and
deferring the rendering of the card for second duration in response to the dwell duration being greater than or equal to the first preset value and less than a second preset value, wherein the first preset value is less than the second preset value.

Example 7. The method according to any one of Examples 1 to 6, where the plurality of historical videos are separated from the target video by at least one video.

Example 8. The method according to any one of Examples 1 to 7, where the dwell duration for the target video is determined by a trained fast/slow flicking model, and the trained fast/slow flicking model is trained at a server and obtained from the server.

Example 9. The method according to any one of Examples 1 to 8, where the video card includes a first control, and the method further includes:
in response to a touch operation of a user on the first control, displaying a page associated with the card.

Example 10. The method according to any one of Examples 1 to 9, further including:
rendering the card on the target video in response to the dwell duration failing to meet the predetermined condition.

Example 11. An apparatus for rendering a video card, including:
a feature obtaining module configured to obtain a feature of a plurality of historical videos;
a dwell duration determination module configured to determine dwell duration for a target video based on the feature of the plurality of historical videos; and
a card rendering module configured to: in response to the dwell duration meeting a predetermined condition, defer rendering of a card associated with the target video.

Example 12. The apparatus according to Example 11, where the feature obtaining module includes:
a historical video determination module configured to determine the plurality of historical videos before the target video;
a scene determination module configured to determine whether the plurality of historical videos include a specified-scene video; and
a scene feature obtaining module configured to: in response to the plurality of historical videos including the specified-scene video, obtain a common feature of the plurality of historical videos and a scene feature.

Example 13. The apparatus according to either of Examples 11 and 12, where the common feature includes at least one of average playing duration of the plurality of historical videos, a smallest playing duration of the plurality of historical videos, a largest playing duration of the plurality of historical videos, a number of touches on a like control for the plurality of historical videos, a number of touches on a comment control for the plurality of historical videos, a number of playing completions of the plurality of historical videos, a number of touches on an avatar control for the plurality of historical videos, and a number of skips for the plurality of historical videos.

Example 14. The apparatus according to any one of Examples 11 to 13, where the scene feature includes at least one of a number of taps on a specified scene, a number of skips for the specified scene, a distribution of likes on the specified scene, and a distribution of dislikes on the specified scene.

Example 15. The apparatus according to any one of Examples 11 to 14, where the card rendering module includes:
a preset value comparison module configured to determine whether the dwell duration is less than a preset value; and
a rendering deferring module configured to defer rendering of the card in response to the dwell duration being less than the preset value.

Example 16. The apparatus according to any one of Examples 11 to 15, where the card rendering module further includes:
a first preset value determination module configured to determine whether the dwell duration is less than a first preset value;
a first duration rendering module configured to defer rendering of the card for first duration in response to the dwell duration being less than the first preset value; and
a second duration rendering module configured to defer rendering of the card for second duration in response to the dwell duration being greater than or equal to the first preset value and less than a second preset value, where the first preset value is less than the second preset value.

Example 17. The apparatus according to any one of Examples 11 to 16, where the plurality of historical videos are separated from the target video by at least one video.

Example 18. The apparatus according to any one of Examples 11 to 17, where the dwell duration for the target video is determined by a trained fast/slow flicking model, and the trained fast/slow flicking model is trained at a server and obtained from the server.

Example 19. The apparatus according to any one of Examples 11 to 18, where the video card includes a first control, and the apparatus further includes:
a page display module configured to: in response to a touch operation of a user on the first control, display a page associated with the card.

Example 20. The apparatus according to any one of Examples 11 to 19, further including:
a second card rendering module configured to render the card on the target video in response to the dwell duration failing to meet the predetermined condition.

Example 21. An electronic device, including:
a processor; and
a memory coupled to the processor, where the memory has stored therein instructions that, when executed by the processor, cause the electronic device to perform actions, and the actions are used to perform the method according to any one of Examples 1 to 10.

Example 22. The electronic device according to any of Example 21, where the obtaining a feature of a plurality of historical videos includes:
determining the plurality of historical videos before the target video;
determining whether the plurality of historical videos include a specified-scene video; and
in response to the plurality of historical videos including the specified-scene video, obtaining a common feature of the plurality of historical videos and a scene feature.

Example 23. The electronic device according to either of Examples 21 and 22, where the common feature includes at least one of average playing duration of the plurality of historical videos, a smallest playing duration of the plurality of historical videos, a largest playing duration of the plurality of historical videos, a number of touches on a like control for the plurality of historical videos, a number of touches on a comment control for the plurality of historical videos, a number of playing completions of the plurality of historical videos, a number of touches on an avatar control for the plurality of historical videos, and a number of skips for the plurality of historical videos.

Example 24. The electronic device according to any one of Examples 21 to 23, where the scene feature includes at least one of a number of taps on a specified scene, a number of skips for the specified scene, a distribution of likes on the specified scene, and a distribution of dislikes on the specified scene.

Example 25. The electronic device according to any one of Examples 21 to 24, where the deferring rendering of a card associated with the target video includes:
determining whether the dwell duration is less than a preset value; and
deferring the rendering of the card in response to the dwell duration being less than the preset value.

Example 26. The electronic device according to any one of Examples 21 to 25, where the deferring rendering of a card associated with the target video includes:
determining whether the dwell duration is less than a first preset value;
deferring the rendering of the card for first duration in response to the dwell duration being less than the first preset value; and
deferring the rendering of the card for second duration in response to the dwell duration being greater than or equal to the first preset value and less than a second preset value, wherein the first preset value is less than the second preset value.

Example 27. The electronic device according to any one of Examples 21 to 26, where the plurality of historical videos are separated from the target video by at least one video.

Example 28. The electronic device according to any one of Examples 21 to 27, where the dwell duration for the target video is determined by a trained fast/slow flicking model, and the trained fast/slow flicking model is trained at a server and obtained from the server.

Example 29. The electronic device according to any one of Examples 21 to 28, where the video card includes a first control, and the method further includes:
in response to a touch operation of a user on the first control, displaying a page associated with the card.

Example 30. The electronic device according to any one of Examples 21 to 29, further including:
rendering the card on the target video in response to the dwell duration failing to meet the predetermined condition.

Example 31. A computer-readable storage medium having computer-executable instructions stored thereon, where the computer-executable instructions are executed by a processor to implement the method according to any of claims 1 to 10.

Example 32. A computer program product, where the computer program product is tangibly stored in a computer-readable medium and includes computer-executable instructions, and the computer-executable instructions cause, when being executed by a device, the device to perform the method according to any of Examples 1 to 10.

Although the present disclosure has been described in languages specific to structural features and/or methodological logical actions, it should be understood that the subject matter defined in the appended claims is not necessarily limited to the specific features or actions described above. In contrast, the specific features and actions described above are merely exemplary forms of implementing the claims.

## Claims

1. A method (200) for rendering a video card, comprising:
obtaining (202) a feature of a plurality of historical videos;
determining (204) dwell duration for a target video based on the feature of the plurality of historical videos; and
in response to the dwell duration meeting a predetermined condition, deferring (206) rendering of a card associated with the target video.

2. The method (200) according to claim 1, wherein obtaining (202) the feature of the plurality of historical videos comprises:
determining the plurality of historical videos before the target video;
determining whether the plurality of historical videos comprise a specified-scene video; and
in response to the plurality of historical videos comprising the specified-scene video, obtaining a common feature of the plurality of historical videos and a scene feature.

3. The method (200) according to claim 2, wherein the common feature comprises at least one of: average playing duration of the plurality of historical videos, a smallest value of playing duration of the plurality of historical videos, a largest value of playing duration of the plurality of historical videos, a number of touches on a like control for the plurality of historical videos, a number of touches on a comment control for the plurality of historical videos, a number of playing completions of the plurality of historical videos, a number of touches on an avatar control for the plurality of historical videos, and a number of skips for the plurality of historical videos.

4. The method (200) according to claim 3, wherein the scene feature comprises at least one of: a number of taps on a specified scene, a number of skips for the specified scene, a distribution of likes on the specified scene, and a distribution of dislikes on the specified scene.

5. The method (200) according to claim 1, wherein deferring (206) the rendering of the card associated with the target video comprises:
determining whether the dwell duration is less than a preset value; and
deferring the rendering of the card in response to the dwell duration being less than the preset value.

6. The method (200) according to claim 1, wherein (206) deferring the rendering of the card associated with the target video comprises:
determining whether the dwell duration is less than a first preset value;
deferring the rendering of the card for first duration in response to the dwell duration being less than the first preset value; and
deferring the rendering of the card for second duration in response to the dwell duration being greater than or equal to the first preset value and less than a second preset value, wherein the first preset value is less than the second preset value.

7. The method (200) according to claim 1, wherein the plurality of historical videos are separated from the target video by at least one video.

8. The method (200) according to any of claims 1 to 7, wherein the dwell duration for the target video is determined by a trained fast/slow flicking model, and the trained fast/slow flicking model is trained at a server and obtained from the server

9. The method (200) according to claim 1, wherein the video card comprises a first control, and the method (200) further comprises:
in response to a touch operation of a user on the first control, displaying a page associated with the card.

10. The method (200) according to claim 1, further comprising:
rendering the card on the target video in response to the dwell duration failing to meet the predetermined condition.

11. An apparatus (700) for rendering a video card, the apparatus (700) comprising:
a feature obtaining module (702) configured to obtain a feature of a plurality of historical videos;
a dwell duration determination module (704) configured to determine dwell duration for a target video based on the feature of the plurality of historical videos; and
a card rendering module (706) configured to: in response to the dwell duration meeting a predetermined condition, defer rendering of a card associated with the target video.

12. An electronic device (800), comprising:
a processor (801); and
a memory (802) coupled to the processor (801), wherein the memory (802) has instructions stored therein, the instructions, when executed by the processor (801), cause the electronic device (800) to perform the method (200) according to any of claims 1 to 10.

13. A computer-readable storage medium having computer-executable instructions stored thereon, wherein the computer-executable instructions are executed by a processor to implement the method (200) according to any of claims 1 to 10.
